# EUROPÄISCHE PATENTSCHRIFT

(11) **EP 2 198 691 B1**
(45) Veröffentlichungstag und Bekanntmachung des Hinweises auf die Patenterteilung: **28.03.2012**
(21) Anmeldenummer: 09014926.1
(22) Anmeldetag: 02.12.2009
(51) Int. Cl.: A01G 3/053

(54) **Arbeitsgerät**
Work device
Appareil de travail

(30) Priorität: 17.12.2008 DE 102008062603
(43) Veröffentlichungstag der Anmeldung: 23.06.2010
(73) Patentinhaber: Andreas Stihl AG & Co. KG, 71336 Waiblingen (DE)
(72) Erfinder: Geromiller, Ludwig, 73635 Rudersberg (DE)
(74) Vertreter: Wasmuth, Rolf

(56) Entgegenhaltungen:
- DE-A1-102007 059 135
- DE-T2- 60 000 123
- US-A- 5 155 914

## Beschreibung

Die Erfindung betrifft ein Arbeitsgerät, insbesondere ein handgeführtes Arbeitsgerät wie eine Heckenschere oder dgl. der im Oberbegriff des Anspruchs 1 angegebenen Gattung.

Aus der DE 296 07 614 U1 ist ein Arbeitsgerät mit einem Heckenscherenanbau bekannt, der zwei gegensinnig zueinander angetriebene Scherblatter aufweist. Die Scherblätter sind über Pleuel mit einem Exzenter verbunden. Beide Pleuel erstrecken sich in Richtung auf die Scherblattträger, also in die gleiche Richtung.

Die US 5,155,914 zeigt eine Heckenschere, bei der beide Pleuel auf die den Messerbalken abgewandte Seite hin ausgerichtet sind. Die Messerbalken können, um die wirksame Werkzeuglänge zu vergrößern, auch an der Seite aus dem Gehäuse ragen, an der die Pleuel angeordnet sind.

Bei Arbeitsgeräten, insbesondere bei handgeführten Arbeitsgeräten wie Heckenscheren oder dgl. stellen die im Betrieb entstehenden Vibrationen eine große Belastung des Bedieners dar. Die durch die Vibrationen erzeugten Kräfte belasten außerdem die Bauteile, so dass diese entsprechend massiv und damit auch schwer ausgebildet werden müssen. Durch die Vibrationen wird die Lebensdauer des Arbeitsgeräts verringert.

Der Erfindung liegt die Aufgabe zugrunde, ein Arbeitsgerät der gattungsgemäßen Art zu schaffen, bei dem die im Betrieb entstehenden Vibrationen verringert sind.

Diese Aufgabe wird durch ein Arbeitsgerät mit den Merkmalen des Anspruchs 1 gelöst.

Es hat sich gezeigt, dass bei Arbeitsgeräten mit zwei gegensinnig und hin- und hergehend angetriebenen Werkzeugen, wie beispielsweise Heckenscheren, ein Großteil der im Betrieb auftretenden Vibrationen im Getriebe und von den oszillierenden Massen der Messerbalken erzeugt werden. Insbesondere bei höheren Drehzahlen überwiegen die Getriebevibrationen die vom Antriebsmotor erzeugten Vibrationen.

Um die Getriebekräfte erster und zweiter Ordnung und damit auch die entstehenden Vibrationen zu verringern, wurde nun vorgeschlagen, die beiden Pleuel gegensinnig auszurichten. Das Schwenkgelenk eines ersten Pleuels ist damit auf der den Werkzeugen zugewandten Seite des Pleuels angeordnet und das Schwenkgelenk des zweiten Pleuels auf der gegenüberliegenden, den Werkzeugen abgewandten Seite. Durch die gegensinnige Ausrichtung der beiden Pleuel heben sich die Kräfte, die am Getriebe durch die oszillierenden Werkzeugmassen eingeleitet werden, insbesondere die Massenkräfte der zweiten Ordnung weitgehend, insbesondere vollständig auf. Dadurch können die im Betrieb, insbesondere bei hohen Drehzahlen erzeugten Vibrationen deutlich verringert werden. Die Anordnung des Schwenkgelenks am zweiten Pleuel auf der den Werkzeugen abgewandten Seite des zweiten Pleuels ist konstruktiv einfach realisierbar. Der Bauraum wird dadurch nur geringfügig vergrößert. Dadurch können auf einfache Weise die Vibrationen im Betrieb verringert und die Lebensdauer des Arbeitsgeräts erhöht werden.

Eine einfache Gestaltung ergibt sich, wenn die Pleuel jeweils an einem Exzenternocken angeordnet sind, wobei die Exzenternocken um eine gemeinsame Drehachse rotierend angetrieben sind. Die beiden Exzenternocken sind dabei vorteilhaft an einer Antriebsscheibe angeordnet, die insbesondere von einem Ritzel um die Drehachse rotierend angetrieben ist. Die Antriebsscheibe kann mit den beiden Exzenternocken einteilig ausgebildet sein, so dass zum Antrieb beider Pleuel nur ein Bauteil benötigt wird. Die beiden Exzenternocken sind vorteilhaft an gegenüberliegenden Seiten der Antriebsscheibe angeordnet. Dadurch liegt jedes Pleuel an der Antriebsscheibe auf. Dies verringert die im Betrieb auftretenden Relativbewegungen und damit die auftretenden Kräfte. Es kann jedoch auch vorteilhaft sein, beide Pleuel an einer Seite der Antriebsscheibe anzuordnen, so dass die Pleuel aneinander anliegen.

Um das zweite Pleuel mit dem zweiten Werkzeug zu verbinden, ist vorteilhaft am Schwenkgelenk des zweiten Pleuels eine Verbindungsstange angeordnet. Die Verbindungsstange überbrückt den Abstand zwischen dem zweiten Schwenkgelenk und dem Verbindungspunkt, der zur Verbindung des Werkzeugs bei einem zum Werkzeug hin ausgerichteten Pleuel mit dem Werkzeug vorgesehen ist. Dadurch können die bei üblichen Arbeitsgeräten eingesetzten Werkzeuge verwendet werden. Es kann jedoch auch vorgesehen sein, das zweite Werkzeug bis zum zweiten Schwenkgelenk zu verlängern und das zweite Schwenkgelenk direkt mit dem zweiten Werkzeug zu verbinden.

Vorteilhaft ist die Verbindungsstange am zweiten Schwenkgelenk in einer Richtung parallel zur Bewegungsrichtung des zweiten Werkzeugs, insbesondere in Verlängerung der Längsmittelachse des zweiten Werkzeugs geführt. Dadurch, dass das erste Schwenkgelenk und das zweite Schwenkgelenk in der gleichen Ebene, die vorteilhaft auch die Drehachse der Antriebsscheibe enthält, geführt sind und weil die beiden Pleuel zu jedem Zeitpunkt parallel zueinander angeordnet sind, gleichen sich die im Betrieb entstehenden Kräfte zweiter Ordnung am Getriebe vollständig aus. Von der Verbindungsstange werden zusätzliche Anregungskräfte erster Ordnung erzeugt. Vorteilhaft ist am ersten Werkzeug eine Zusatzmasse angeordnet, die die durch die Verbindungsstange verursachten Massenkräfte mindestens teilweise, insbesondere vollständig ausgleicht. Dadurch können die Massenkräfte erster und zweiter Ordnung vollständig ausgeglichen werden. Dadurch lässt sich eine deutliche Reduzierung der im Betrieb entstehenden Vibrationen erreichen. Die Zusatzmasse kann dabei auf das erste Werkzeug aufgesetzt oder einteilig mit dem ersten Werkzeug ausgebildet sein.

Vorteilhaft sind die Werkzeuge in Bewegungsrichtung geführt. Ein seitliches Ausweichen der Werkzeuge kann dadurch auf einfache Weise verhindert werden. Die Werkzeuge ragen vorteilhaft in die gleiche Richtung und sind etwa übereinanderliegend angeordnet. Die beiden Werkzeuge können dabei direkt aufeinanderliegend angeordnet sein oder unter Zwischenlage von weiteren Elementen. Die Werkzeuge sind insbesondere Messerbalken, und das Arbeitsgerät ist vorteilhaft eine handgeführte Heckenschere.

Ein Ausführungsbeispiel der Erfindung wird im Folgenden anhand der Zeichnung erläutert. Es zeigen:
- Fig. 1: eine perspektivische Seitenansicht einer Hecken- schere,
- Fig. 2: eine schematische Schnittdarstellung durch das Ge- triebe der Heckenschere aus Fig. 1,
- Fig. 3: eine schematische Seitenansicht in Richtung des Pfeils III in Fig. 2,
- Fig. 4: eine perspektivische Darstellung des Getriebes der Heckenschere in einer ersten Stellung in Draufsicht auf den ersten Messerbalken,
- Fig. 5: eine perspektivische Darstellung des Getriebes der Heckenschere in der Stellung aus Fig. 4 in Draufsicht auf den zweiten Messerbalken,
- Fig. 6: eine perspektivische Darstellung des Getriebes in einer zweiten Stellung in Draufsicht auf den ersten Messerbalken,
- Fig. 7: eine perspektivische Darstellung des Getriebes in der Stellung aus Fig. 6 in Draufsicht auf den zweiten Messerbalken,
- Fig. 8: ein Diagramm, das den Verlauf der Massenkräfte an einem ersten Messerbalken zeigt und
- Fig. 9: ein Diagramm, das den Verlauf der Massenkräfte am zweiten Messerbalken zeigt,
- Fig. 10: ein Diagramm, das den Verlauf der Massenkräfte bei einer Messeranordnung nach dem Stand der Technik zeigt.

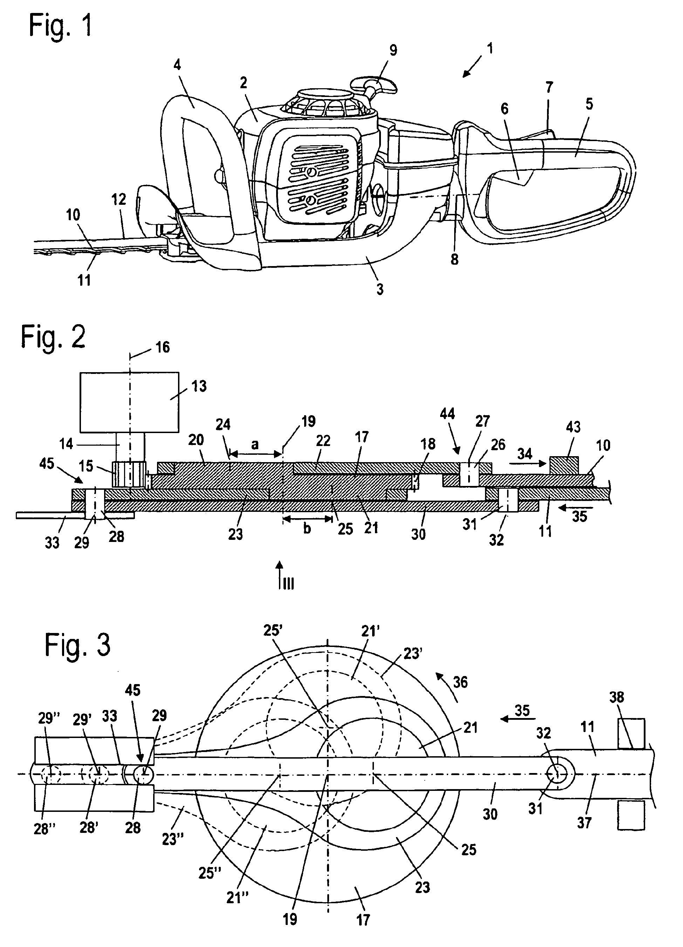

In Fig. 1 ist als Ausführungsbeispiel für ein Arbeitsgerät eine handgeführte Heckenschere 1 gezeigt. Das Arbeitsgerät kann beispielsweise auch eine Erntemaschine oder eine andere Schneideinrichtung sein. Beispielsweise kann das Arbeitsgerät ein Mähdrescher oder eine Säge mit gegenläufig angetriebenen Schneiden sein. Das Arbeitsgerät kann auch ein Spezialernter wie ein Olivenschüttler oder dgl. sein. Die Heckenschere 1 besitzt ein Gehäuse 2, in dem ein in Fig. 1 nicht gezeigter Antriebsmotor angeordnet ist. Der Antriebsmotor ist als Verbrennungsmotor ausgebildet und über einen aus dem Gehäuse 2 ragenden Anwerfgriff 9 zu starten. Das Gehäuse 2 ist an einem Griffrahmen 3 über nicht gezeigte Schwingungsdämpfungselemente gelagert. Der Griffrahmen 3 besitzt einen vorderen Handgriff 4, der als Bügelgriff ausgebildet ist, sowie einen hinteren Handgriff 5. Am hinteren Handgriff 5 sind ein Gashebel 6 und eine Gashebelsperre 7 schwenkbar gelagert. Der hintere Handgriff 5 ist am Griffrahmen 3 um eine Drehachse 8 drehbar gelagert, so dass für den hinteren Handgriff 5 unterschiedliche Griffpositionen einstellbar sind. Als Werkzeuge besitzt die Heckenschere 1 zwei Messerbalken 10, 11, die an der dem hinteren Handgriff 5 gegenüberliegenden Seite nach vorne aus dem Griffrahmen 3 ragen. Die beiden Messerbalken 10, 11 sind aufeinanderliegend angeordnet. Der obere Messerbalken 10 ist von einer Führungsschiene 12 über einen Teil seiner Länge abgedeckt. Die Führungsschiene 12 führt die Messerbalken 10 und 11 seitlich und vertikal und gewährleistet eine ausreichende Steifigkeit des Schneidwerkzeugs.

Fig. 2 zeigt das Getriebe der Heckenschere 1 in schematischer Darstellung. Der im Gehäuse 2 angeordnete Antriebsmotor 13 treibt über eine Antriebswelle 14 ein Ritzel 15 an. Das Ritzel 15 treibt eine Antriebsscheibe 17 an, die um eine Drehachse 19 drehbar gelagert ist. Die Antriebsscheibe 17 kann beispielsweise über einen Lagerbolzen in einem Getriebegehäuse der Heckenschere 1 gelagert sein. Die Antriebswelle 14 und das Ritzel 15 sind um eine Drehachse 16 rotierend angetrieben, die zur Drehachse 19 einen Abstand hat. Das Ritzel 15 greift in eine Verzahnung 18 ein, die am Außenumfang der Antriebsscheibe 17 ausgebildet ist. An der dem Antriebsmotor 13 zugewandten Oberseite besitzt die Antriebsscheibe 17 einen ersten Exzenternocken 20, an dem ein erstes Pleuel 22 schwenkbar gelagert ist. Die Schwenkachse 24 des Pleuels 22, die der Mittelachse des ersten Exzenternockens 20 entspricht, besitzt zur Drehachse 19 einen Abstand a. An der gegenüberliegenden, dem Antriebsmotor 13 abgewandten Unterseite der Antriebsscheibe 17 ist ein zweiter Exzenternocken 21 angeordnet, an dem ein zweites Pleuel 23 um eine Schwenkachse 25 schwenkbar gelagert ist. Die Schwenkachse 25 entspricht der Mittelachse des zweiten Exzenternockens 21 und besitzt zur Drehachse 19 der Antriebsscheibe 17 einen Abstand b. Die Abstände a und b sind gleich groß. Die beiden Schwenkachsen 24 und 25 und damit auch die Exzenternocken 20, 21 sind bezogen auf die Drehachse 19 einander gegenüberliegend angeordnet. Die Drehachse 19 und die beiden Schwenkachsen 24 und 25 liegen in einer Ebene, die der Schnittebene in Fig. 2 entspricht. Es kann auch vorgesehen sein, dass die beiden Exzenternocken 20, 21 auf einer Seite der Antriebsscheibe 17 angeordnet sind.

Das erste Pleuel 22 ragt in Richtung auf die beiden Messerbalken 10 und 11. An seinem dem Messerbalken 10 zugewandten Ende ist das erste Pleuel 22 über ein erstes Schwenkgelenk 44 mit dem Messerbalken 10 verbunden. Das erste Schwenkgelenk 44 ist durch einen Verbindungsbolzen 26 gebildet. Am ersten Schwenkgelenk 44 ist das Pleuel 22 um eine Schwenkachse 27 gegenüber dem Messerbalken 10 schwenkbar, die der Längsmittelachse des Verbindungsbolzens 26 entspricht.

Das zweite Pleuel 23 ragt auf die den Messerbalken 10, 11 abgewandte Seite, so dass die beiden Pleuel 22 und 23 gegensinnig zueinander ausgerichtet sind. Das zweite Pleuel 23 ist über ein zweites Schwenkgelenk 45 mit einer Verbindungsstange 30 verbunden. Das zweite Schwenkgelenk 45 ist auf der den Messerbalken 10, 11 abgewandten Seite des zweiten Pleuels 23 angeordnet. Über die beiden Pleuel 22, 23 sind die beiden Messerbalken 10, 11 hin- und hergehend und gegensinnig zueinander angetrieben.

In der in Fig. 2 gezeigten Stellung, in der die beiden Schwenkachsen 24 und 25 in einer Ebene liegen, in der auch die Längsmittelachse 37 der Messerbalken 10, 11 (Fig. 3) liegt, sind auch die beiden Schwenkgelenke 44 und 45 in dieser Ebene angeordnet. Die beiden Schwenkgelenke 44 und 45 sind dabei auf gegenüberliegenden Seiten der Drehachse 19 angeordnet. Das zweite Schwenkgelenk 45 ist durch einen Verbindungsbolzen 28 gebildet. Am zweiten Schwenkgelenk 45 ist das zweite Pleuel 23 gegenüber der Verbindungsstange 30 um eine Schwenkachse 29 schwenkbar. Die Verbindungsstange 30 verbindet das zweite Schwenkgelenk 45 mit dem zweiten Messerbalken 11. Die Verbindungsstange 30 ist an einem Ende über den Verbindungsbolzen 28 mit dem zweiten Pleuel 23 verbunden und am gegenüberliegenden, zweiten Ende über einen Verbindungsbolzen 31 mit dem zweiten Messerbalken 11. Der Verbindungsbolzen 31 besitzt eine Längsmittelachse 32.

Die Verbindungsstange 30 und der zweite Messerbalken 11 sind am Verbindungsbolzen 31 vorteilhaft fest miteinander verbunden, so dass keine Schwenkbewegung der Verbindungsstange 30 gegenüber dem Messerbalken 11 um die Längsmittelachse 32 möglich ist. Wenn am Verbindungsbolzen 31 eine Schwenkbewegung der Verbindungsstange 30 zum zweiten Messerbalken 11 möglich ist, ist vorteilhaft am Verbindungsbolzen 28 eine Führung 33 vorgesehen, die den Verbindungsbolzen 28 oder die Verbindungsstange 30 in Richtung der Längsmittelachse 37 der Messerbalken 10, 11 führt. Dadurch ist ein seitliches Ausweichen des zweiten Schwenkgelenks 45 vermieden.

Zum Ausgleich der durch die Verbindungsstange 30 hervorgerufenen Massenkräfte ist am Messerbalken 10 eine Zusatzmasse 43 angeordnet. Die Zusatzmasse 43 kann als separater Massekörper auf dem Messerbalken 10 festgelegt oder einteilig mit dem Messerbalken 10 ausgebildet bzw. an diesem angeformt sein.

In Fig. 2 ist der erste Exzenternocken 20 in seiner den Messerbalken 10, 11 abgewandten und der zweite Exzenternocken 21 in seiner den Messerbalken 10, 11 zugewandten Position gezeigt. Aus dieser Stellung bewegt sich der erste Messerbalken 10 in Richtung des Pfeils 34 von der Antriebsscheibe 17 bei weiterer Drehung der Antriebsscheibe 17 weg, während der zweite Messerbalken 11 in Richtung des Pfeils 35 zur Antriebsscheibe 17 hin bewegt wird.

Fig. 3 zeigt die Stellung des Pleuels 23 während der weiteren Drehung der Antriebsscheibe 17 in Richtung des Pfeils 36. In der in Fig. 3 mit durchgezogener Linie gezeigten Stellung des Pleuels 23, die der in Fig. 2 gezeigten Stellung des Pleuels 23 entspricht, liegt die Schwenkachse 25 des Pleuels 23 am Exzenternocken 21 auf der dem Schwenkgelenk 45 abgewandten Seite der Drehachse 19. Die Längsmittelachse 32 des Verbindungsbolzens 31 besitzt den maximalen Abstand zur Längsmittelachse 19.

Bei einer Drehung der Antriebsscheibe 17 um 90° in Richtung des Pfeils 36 um die Drehachse 19 kommt das Pleuel in der in Fig. 3 gestrichelt gezeichneten Lage eines Pleuels 23' zu liegen. Die Schwenkachse 25' liegt in dieser Stellung bezogen auf die Längsmittelachse 37 auf der Höhe der Drehachse 19. Das Schwenkgelenk 25 hat sich in Richtung der Längsmittelachse 37 von der Drehachse 19 weg bewegt, so dass der Messerbalken 11 in eine in Fig. 3 nicht gezeigte Stellung zur Drehachse 19 hin bewegt wurde.

Bei weiterer Drehung der Antriebsscheibe 17 kommt das Pleuel 23 " in eine Position, in der die Schwenkachse 25 " auf der dem Messerbalken 11 abgewandten, dem Verbindungsbolzen 28" zugewandten Seite der Drehachse 19 angeordnet ist. In dieser Stellung ist der Verbindungsbolzen 28" noch weiter von der Drehachse 19 entfernt. Entsprechend ist der Abstand des Verbindungsbolzens 31 zur Drehachse 19 kleiner.

Wie Fig. 3 zeigt, liegen die Schwenkachse 29, die Drehachse 19 und die Längsmittelachse 32 des Verbindungsbolzens 31 in jeder Stellung des Pleuels 23 in einer Ebene, die die Längsmittelachse 37 des Messerbalkens 11 enthält. Dies wird durch die Führung 33 gewährleistet. Anstatt der Führung 33 kann auch eine feste Verbindung der Verbindungsstange 30 mit dem Messerbalken 11 vorgesehen sein, die eine Schwenkbewegung der Verbindungsstange 30 verhindert. Wie Fig. 3 auch zeigt, ist der Messerbalken 11 an einer Führung 38 in Richtung seiner Längsmittelachse 37 geführt. Entsprechend ist auch der Messerbalken 10 geführt. Die Führung 38 kann auch als in einer Längsnut im Messerbalken 11 geführter Bolzen ausgeführt sein. Vorteilhaft ist eine Führung 38 für beide Messerbalken 10, 11 vorgesehen. Es kann jedoch auch für jeden Messerbalken 10, 11 eine separate Führung 38 vorgesehen sein.

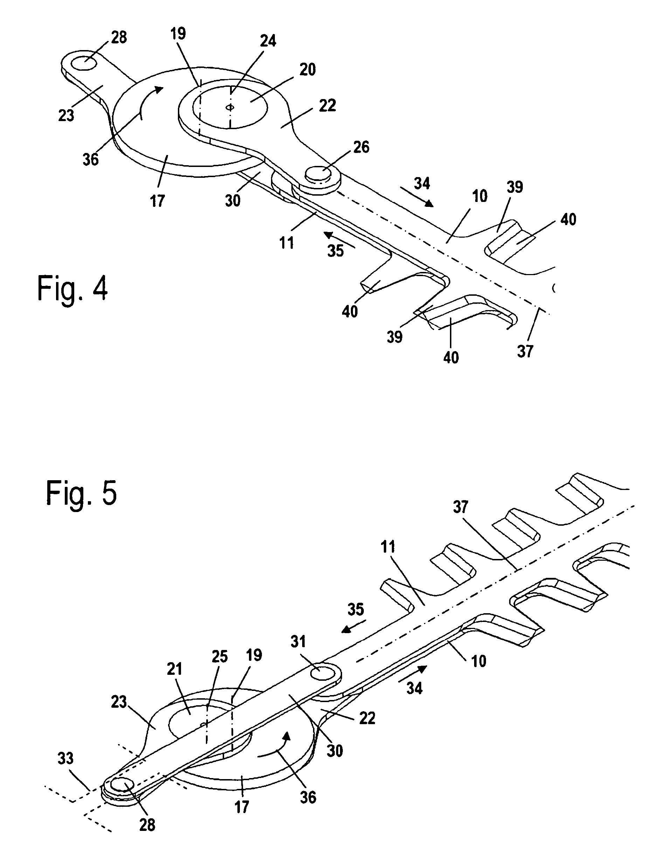

Die Fig. 4 und 5 zeigen die Lage des ersten Pleuels 22 und des zweiten Pleuels 23 in einer weiteren Stellung des Getriebes der Heckenschere 1. Das Pleuel 22 bewegt sich bei weiterer Drehung der Antriebsscheibe 17 in Richtung des Pfeils 36 um die Drehachse 19 weiter zum Messerbalken 10 hin, so dass der Messerbalken 10 in Richtung des Pfeils 34 von der Drehachse 19 weggeschoben wird. Das zweite Pleuel 23 bewegt sich von den Messerbalken 10, 11 weg, so dass der zweite Messerbalken 11 in Richtung des Pfeils 35 zur Antriebsscheibe 17 hergezogen wird. Wie Fig. 4 zeigt, besitzt der erste Messerbalken 10 eine Reihe von Messern 39, die seitlich nach außen ragen und an denen jeweils zwei Schneiden ausgebildet sind. Der zweite Messerbalken 11 besitzt seitlich nach außen ragende Messer 40, die ebenfalls jeweils zwei Schneiden besitzen. Bei der in den Fig. 4 und 5 gezeigten Stellung der Messerbalken 10 und 11 überlappen sich die Messer 39 und 40 teilweise. Es kann vorgesehen sein, dass an den Messern 39, 40 jeweils nur eine Schneide ausgebildet ist.

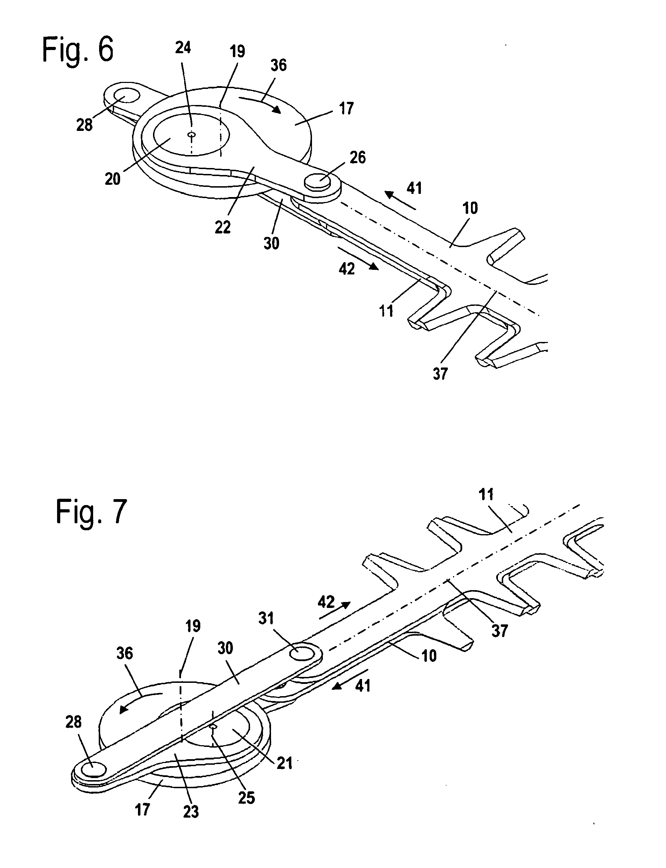

In den Fig. 6 und 7 ist das Getriebe der Heckenschere 1 in einer weiteren Stellung gezeigt. Die Schwenkachse 24 des ersten Pleuels 22 ist auf der der Drehachse 19 abgewandten Seite des Messerbalkens 10 angeordnet. Bei weiterer Drehung der Antriebsscheibe 17 in Richtung des Pfeils 36 wird die Schwenkachse 24 noch weiter auf die den Messerbalken 10 und 11 abgewandte Seite der Drehachse 19 gebracht. Dadurch wird der erste Messerbalken 10 in Richtung des Pfeils 41 zur Drehachse 19 gezogen. Die Schwenkachse 25 des zweiten Pleuels 23 ist auf der dem Messerbalken 10 und 11 zugewandten Seite der Drehachse 19 angeordnet und bewegt sich bei weiterer Drehung der Antriebsscheibe 17 in Richtung des Pfeils 36 weiter zu den Messerbalken 10, 11 hin. Dadurch wird der zweite Messerbalken 11 in Richtung des Pfeils 42 von der Drehachse 19 weggeschoben.

Aufgrund der gegenüberliegenden Anordnung der beiden Exzenternocken 20, 21 gleichen sich die durch die Pleuel 22, 23 am Getriebe eingeleiteten seitlichen, also quer zur Längsmittelachse 37 stehenden Kräfte vollständig aus. Die Pleuel 22, 23 sind dabei ebenso wie die Exzenternocken 20, 21 identisch ausgebildet. Die in Richtung der Längsmittelachse 37 entstehenden Kräfte der zweiten Ordnung am Getriebe werden dadurch ausgeglichen, dass die beiden Pleuel 22, 23 entgegengerichtet zueinander ausgerichtet sind. Die zusätzlich durch die Verbindungsstange 30 eingeleiteten Kräfte können durch die in Fig. 2 gezeigte Zusatzmasse 43 am ersten Messerbalken 10 ausgeglichen werden. Dadurch können die im Betrieb am Getriebe eingeleiten Kräfte und dadurch die durch das Getriebe verursachten Vibrationen der Heckenschere 1 deutlich verringert werden.

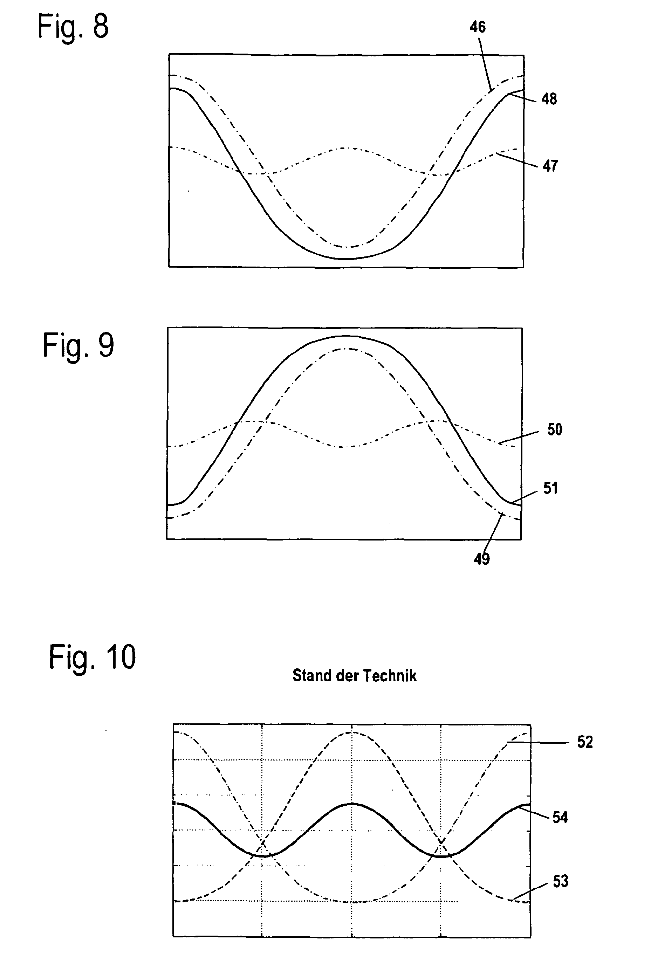

Die Figuren 8 und 9 zeigen den Verlauf der Massenkräfte an den Messerbalken 10 und 11. In Fig. 8 ist der Verlauf der Massenkräfte am ersten Messerbalken 10 über eine Umdrehung der Antriebsscheibe 17 gezeigt. Die Kurve 46 zeigt den Verlauf der Massenkräfte erster Ordnung und die Kurve 47 den Verlauf der Massenkräfte zweiter Ordnung. Die resultierende Kraft ist in der Kurve 48 dargestellt. Näherungsweise und unter der Annahme, dass die Masse des Pleuels 22 deutlich kleiner als die Masse des Messerbalkens 10 ist, lässt sich die resultierende Kraft nach folgender Formel berechnen: F = m·r·ω²·(cosωt + λ·cos2ωt). Dabei ist F die oszillierende Massenkraft, m ist die oszillierende Masse, r ist der Kurbelradius, λ ist das Kurbelverhältnis, das das Verhältnis des Kurbelradius zur Pleuellänge angibt, und ω ist die Winkelgeschwindigkeit.

In Fig. 9 sind die oszillierenden Massenkräfte für den zweiten Messerbalken 11 gezeigt. Dabei zeigt die Kurve 49 die oszillierenden Massenkräfte erster Ordnung, und die Kurve 50 zeigt die oszillierenden Massenkräfte zweiter Ordnung. Die Kurve 51 gibt die resultierende Kraft der Massenkräfte erster und zweiter Ordnung an. Wie die Figuren 8 und 9 zeigen, sind die oszillierenden Massenkräfte erster und zweiter Ordnung für die beiden Messerbalken 10 und 11 genau entgegengerichtet, so dass sich die Kräfte aufheben.

Fig. 10 zeigt den Verlauf der Massenkräfte bei einer bekannten Pleuelanordnung, bei der beide Pleuel in Richtung auf die Scherblattträger ragen. Die Kurve 52 zeigt dabei die resultierenden Massenkräfte erster und zweiter Ordnung für einen ersten Messerträger und die Kurve 53 die resultierenden Massenkräfte für einen zweiten Messerträger. Die Massenkräfte erster und zweiter Ordnung gleichen sich bei der bekannten Pleuelanordnung nicht aus. Es ergibt sich eine resultierende Kraft, die die Kurve 54 anzeigt.

Die vorgeschlagene Anordnung der Pleuel kann auch bei anderen gegensinnig und hin- und hergehend angetriebenen Werkzeugen vorteilhaft sein.

## Patentansprüche

1. Arbeitsgerät mit einem Antriebsmotor (13) und mit mindestens zwei von dem Antriebsmotor (13) gegensinnig und hin- und hergehend angetriebenen Werkzeugen, wobei jedes Werkzeug über ein Pleuel (22, 23) angetrieben ist, das über ein an dem Pleuel (22, 23) angeordnetes Schwenkgelenk (44, 45) mit dem zugeordneten Werkzeug verbunden ist, wobei das Schwenkgelenk (44) an einem ersten Pleuel (22) auf der den Werkzeugen zugewandten Seite des ersten Pleuels (22) angeordnet ist,
**dadurch gekennzeichnet, dass** das Schwenkgelenk (45) an einem zweiten Pleuel (23) so auf der den Werkzeugen abgewandten Seite des zweiten Pleuels (23) angeordnet ist, dass die beiden Pleuel (22, 23) gegensinnig zueinander ausgerichtet sind.

2. Arbeitsgerät nach Anspruch 1,
**dadurch gekennzeichnet, dass** die Pleuel (22, 23) jeweils an einem Exzenternocken (20, 21) angeordnet sind, wobei die beiden Exzenternocken (20, 21) um eine gemeinsame Drehachse (19) rotierend angetrieben sind.

3. Arbeitsgerät nach Anspruch 2,
**dadurch gekennzeichnet, dass** die beiden Exzenternocken (20, 21) an einer Antriebsscheibe (17) angeordnet ist, die um die Drehachse (19) rotierend angetrieben ist.

4. Arbeitsgerät nach Anspruch 3,
**dadurch gekennzeichnet, dass** die beiden Exzenternocken (20, 21) an gegenüberliegenden Seiten der Antriebsscheibe (17) angeordnet sind.

5. Arbeitsgerät nach einem der Ansprüche 3 bis 4,
**dadurch gekennzeichnet, dass** die Exzenternocken (20, 21) bezogen auf die Drehachse (19) einander gegenüberliegend an der Antriebsscheibe (17) angeordnet sind.

6. Arbeitsgerät nach einem der Ansprüche 1 bis 5,
**dadurch gekennzeichnet, dass** am Schwenkgelenk (45) des zweiten Pleuels (23) eine Verbindungsstange (30) angeordnet ist, die das zweite Pleuel (23) mit dem zweiten Werkzeug verbindet.

7. Arbeitsgerät nach Anspruch 6,
**dadurch gekennzeichnet, dass** die Verbindungsstange (30) am zweiten Schwenkgelenk (45) in einer Richtung parallel zur Bewegungsrichtung des zweiten Werkzeugs geführt ist.

8. Arbeitsgerät nach Anspruch 7,
**dadurch gekennzeichnet, dass** die Verbindungsstange (30) am zweiten Schwenkgelenk (45) in Verlängerung der Längsmittelachse (37) des zweiten Werkzeugs geführt ist.

9. Arbeitsgerät nach einem der Ansprüche 6 bis 8,
**dadurch gekennzeichnet, dass** am ersten Werkzeug eine Zusatzmasse (43) angeordnet ist, die die durch die Verbindungsstange (30) verursachten Massenkräfte mindestens teilweise ausgleicht.

10. Arbeitsgerät nach einem der Ansprüche 1 bis 9,
**dadurch gekennzeichnet, dass** die Werkzeuge in Bewegungsrichtung geführt sind.

11. Arbeitsgerät nach einem der Ansprüche 1 bis 10,
**dadurch gekennzeichnet, dass** die Werkzeuge in die gleiche Richtung ragen und etwa übereinanderliegend angeordnet sind.

12. Arbeitsgerät nach einem der Ansprüche 1 bis 11,
**dadurch gekennzeichnet, dass** die Werkzeuge Messerbalken (10, 11) sind.

13. Arbeitsgerät nach einem der Ansprüche 1 bis 12,
**dadurch gekennzeichnet, dass** das Arbeitsgerät eine handgeführte Heckenschere (1) ist.

## Claims

1. Working device comprising a drive motor (13) and at least two tools driven by the drive motor (13) to perform reciprocating movements in opposite directions, wherein each tool is driven by a connecting rod (22, 23) connected to the associated tool via a swivel joint (44, 45) located on the connecting rod (22, 23), the swivel joint (44) being mounted on a first connecting rod (22) on the side of the first connecting rod (22) which faces the tools,
**characterised in that** the swivel joint (45) is mounted on a second connecting rod (23) on the side which is remote from the tools in such a way that the two connecting rods (22, 23) are oriented in opposite directions with respect to each other.

2. Working device according to claim 1,
**characterised in that** each of the connecting rods (22, 23) is mounted on an eccentric cam (20, 21), the two eccentric cams (20, 21) being driven to rotate about a common axis of rotation (19).

3. Working device according to claim 2,
**characterised in that** the two eccentric cams (20, 21) are mounted on a drive disc (17) driven to rotate about the axis of rotation (19).

4. Working device according to claim 3,
**characterised in that** the two eccentric cams (20, 21) are mounted on opposite sides of the drive disc (17).

5. Working device according to any of claims 3 to 4,
**characterised in that** two eccentric cams (20, 21) are mounted on opposite sides of the drive disc (17) with respect to the axis of rotation (19).

6. Working device according to any of claims 1 to 5,
**characterised in that** the swivel joint (45) of the second connecting rod (23) is fitted with a link rod (30) which connects the second connecting rod (23) to the second tool.

7. Working device according to claim 6,
**characterised in that** the link rod (30) is guided on the second swivel joint (45) in a direction parallel to the direction of movement of the second tool.

8. Working device according to claim 7,
**characterised in that** the link rod (30) is guided on the second swivel joint (45) in extension of the longitudinal central axis (37) of the second tool.

9. Working device according to any of claims 6 to 8,
**characterised in that** an auxiliary mass (43) is provided on the first tool for the at least partial compensation of the inertial forces generated by the link rod (30).

10. Working device according to any of claims 1 to 9,
**characterised in that** the tools are guided in the direction of movement.

11. Working device according to any of claims 1 to 10,
**characterised in that** the tools project in the same direction and are arranged approximately above each other.

12. Working device according to any of claims 1 to 11,
**characterised in that** the tools are cutting bars.

13. Working device according to any of claims 1 to 12,
**characterised in that** the working device is a hand-guided hedge cutter (1).

## Revendications

1. Appareil de travail avec un moteur d'entraînement (13) et au moins deux outils entraînés en sens inverse et suivant un mouvement de va-et-vient par le moteur d'entraînement (13), étant précisé que chaque outil est entraîné par l'intermédiaire d'une bielle (22, 23) qui est reliée à l'outil correspondant par l'intermédiaire d'une articulation (44, 45) disposée sur la bielle (22, 23), étant précisé que l'articulation (44) est disposée sur une première bielle (22) sur le côté de la première bielle (22) tourné vers les outils,
**caractérisé en ce que** l'articulation (45) sur une seconde bielle (23) est disposée sur le côté de ladite seconde bielle (23) opposé aux outils de telle sorte que les deux bielles (22, 23) soient dirigées en sens inverse l'une par rapport à l'autre.

2. Appareil de travail selon la revendication 1,
**caractérisé en ce que** les bielles (22, 23) sont disposées chacune sur une came d'excentrique (20, 21), étant précisé que les deux cames d'excentrique (20, 21) sont entraînées en rotation sur un axe de rotation commun (19).

3. Appareil de travail selon la revendication 2,
**caractérisé en ce que** les deux cames d'excentrique (20, 21) sont disposées sur un disque d'entraînement (17) qui est entraîné en rotation sur l'axe de rotation (19).

4. Appareil de travail selon la revendication 3,
**caractérisé en ce que** les deux cames d'excentrique (20, 21) sont disposées sur les côtés opposés du disque d'entraînement (17).

5. Appareil de travail selon l'une des revendications 3 à 4,
**caractérisé en ce que** les cames d'excentrique (20, 21) sont disposées sur le disque d'entraînement (17) à l'opposé l'une de l'autre par rapport à l'axe de rotation (19).

6. Appareil de travail selon l'une des revendications 1 à 5,
**caractérisé en ce qu'**il est prévu sur l'articulation (45) de la seconde bielle (23) une tige de liaison (30) qui relie la seconde bielle (23) au second outil.

7. Appareil de travail selon la revendication 6,
**caractérisé en ce que** la tige de liaison (30) prévue sur la seconde articulation (45) est guidée dans un sens parallèle au sens de déplacement du second outil.

8. Appareil de travail selon la revendication 7,
**caractérisé en ce que** la tige de liaison (30) prévue sur la seconde articulation (45) est guidée dans le prolongement de l'axe longitudinal médian (37) du second outil.

9. Appareil de travail selon l'une des revendications 6 à 8,
**caractérisé en ce qu'**il est prévu sur le premier outil une masse supplémentaire (43) qui compense au moins en partie les forces d'inertie dues à la tige de liaison (30).

10. Appareil de travail selon l'une des revendications 1 à 9,
**caractérisé en ce que** les outils sont guidés dans le sens de déplacement.

11. Appareil de travail selon l'une des revendications 1 à 10,
**caractérisé en ce que** les outils dépassent dans le même sens et sont disposés à peu près l'un sur l'autre.

12. Appareil de travail selon l'une des revendications 1 à 11,
**caractérisé en ce que** les outils sont constitués par des barres de coupe (10, 11).

13. Appareil de travail selon l'une des revendications 1 à 12, **caractérisé en ce qu'**il est constitué par un taille-haie tenu à la main (1).
